# EUROPÄISCHE PATENTANMELDUNG

(11) **EP 1 014 289 A2**
(43) Veröffentlichungstag der Anmeldung: **28.06.2000**
(21) Anmeldenummer: 99125567.0
(22) Anmeldetag: 21.12.1999
(51) Int. Cl.: G06K 7/00

(54) **Kartenlesevorrichtung**

(30) Priorität: 23.12.1998 DE 19859993
(71) Anmelder: Siemens Electromechanical Components GmbH & Co. KG, 81739 München (DE)
(72) Erfinder: Hoolhorst, Albert, 4527 Aardenburg (BE); De Winter, Stefaan, 9230 Wetteren (BE)
(74) Vertreter: Basner, Rudolf

(57) **Zusammenfassung**

Es wird eine Kartenlesevorrichtung mit einem elektrischen Verbinder zum Kontaktieren von Kontaktelementen einer zu lesenden Karte beschrieben. Die beschriebene Kartenlesevorrichtung zeichnet sich dadurch aus, daß der elektrische Verbinder derart ausgebildet ist, daß mehrere elektrische Verbinder dieser Art unter gegenseitiger elektrischer und mechanischer Verbindung übereinander stapelbar sind.

## Beschreibung

Die vorliegende Erfindung betrifft eine Vorrichtung gemäß dem Oberbegriff des Patentanspruchs 1, d.h. eine Kartenlesevorrichtung mit einem elektrischen Verbinder zum Kontaktieren von Kontaktelementen einer zu lesenden Karte.

Die genannte Kartenlesevorrichtung ist beispielsweise eine Lesevorrichtung zum Lesen von Chipkarten, SIMs, MultiMedia-Cards oder dergleichen.

Solche Kartenlesevorrichtungen sind seit langem in einer Vielzahl unterschiedlichster Ausführungsformen bekannt.

Seit die zu lesenden Karten wie beispielsweise die bereits erwähnten MultiMediaCards auch als Speichermedien verwendet werden (können), besteht ein Bedarf an Kartenlesevorrichtungen, welche gleichzeitig mehrere Karten kontaktieren können.

Eine solche Kartenlesevorrichtung ist beispielsweise aus der DE 196 53 599 A1 bekannt. Die in dieser Druckschrift beschriebene Kartenlesevorrichtung ist eine Kartenlesevorrichtung gemäß dem Oberbegriff des Patentanspruchs 1.

Bei der Kartenlesevorrichtung gemäß der DE 196 53 599 A1 können mehrere Karten in seitlich versetzt übereinanderliegender Relativlage in diese eingesetzt werden. Durch die seitlich versetzt übereinanderliegende Relativlage der Karten können diese selbst dann, wenn sie unmittelbar aufeinanderliegen, gleichzeitig kontaktiert werden. So können durch eine relativ klein und einfach aufgebaute Kartenlesevorrichtung mehrere Karten gleichzeitig kontaktiert werden. Unter bestimmten Umständen, genauer gesagt wenn eine Kartenlesevorrichtung dieser Art für eine sehr große Anzahl von Karten ausgelegt werden muß, belegt die Kartenlesevorrichtung aber eine relativ große Fläche auf der sie tragenden Leiterplatte. Ferner kann eine Kartenlesevorrichtung dieser Art nur immer eine durch den Aufbau vorgegebene maximale Anzahl von Karten gleichzeitig aufnehmen.

Der vorliegenden Erfindung liegt daher die Aufgabe zugrunde, die Kartenlesevorrichtung gemäß dem Oberbegriff des Patent-anspruchs 1 derart weiterzubilden, daß der Platz, den diese auf einer sie tragenden Leiterplatte belegt, unter allen Umständen minimal ist.

Diese Aufgabe wird erfindungsgemäß durch das im kennzeichnenden Teil des Patentanspruchs 1 beanspruchte Merkmal gelöst.

Die erfindungsgemäße Kartenlesevorrichtung zeichnet sich gemäß dem kennzeichnenden Teil des Patentanspruchs 1 dadurch aus, daß sie einen zum Kontaktieren einer zu lesenden Karte vorgesehenen elektrischen Verbinder aufweist, welcher derart ausgebildet ist, daß mehrere elektrische Verbinder dieser Art unter gegenseitiger elektrischer und mechanischer Verbindung übereinander stapelbar sind.

Der Verbinderstapel kann eine beliebige Anzahl von elektrischen Verbindern umfassen, wobei nur einer der elektrischen Verbinder, welches vorzugsweise der unterste elektrische Verbinder des Verbinderstapels ist, mit der die Kartenlesevorrichtung tragenden Leiterplatte verbunden werden muß. Alle anderen Verbinder können auf diesen einen elektrischen Verbinder aufgestapelt werden.

Die elektrischen Verbinder können exakt, d.h. ohne gegenseitigen seitlichen Versatz übereinandergestapelt werden.

Hieraus ergeben sich zwei Vorteile, nämlich
- 1): daß der Platz, den die Kartenlesevorrichtung auf der diese tragenden Leiterplatte belegt, unabhängig von der Anzahl der zu kontaktierenden Karten kaum größer ist, als eine der zu kontaktierenden Karten selbst, und
- 2): daß die Anzahl der Karten, die durch eine derartige Kartenlesevorrichtung gleichzeitig kontaktierbar ist, jederzeit durch Hinzufügen oder Entfernen von elektrischen Verbindern (vergrößern oder Verkleinern des Verbinderstapels) an die jeweiligen Bedürfnisse anpaßbar ist.

Vorteilhafte Weiterbildungen der Erfindung sind den Unteransprüchen, der folgenden Beschreibung und den Figuren entnehmbar.

Die Erfindung wird nachfolgend anhand eines Ausführungsbeispiels unter Bezugnahme auf die Figuren näher erläutert.
Es zeigen
- Figur 1: eine perspektivische Ansicht eines zum Kontaktieren einer zu lesenden Karte vorgesehenen elektrischen Verbinders der nachfolgend näher beschriebenen Kartenlesevorrichtung,
- Figur 2: je ein Kontaktelement von zwei übereinander angeordneten elektrischen Verbindern der in der Figur 1 dargestellten Art,
- Figur 3: eine Vorderansicht eines mehrere übereinander angeordnete elektrische Verbinder gemäß Figur 1 umfassenden Verbinderstapels, und
- Figur 4: eine Rückansicht des in der Figur 3 gezeigten Verbinderstapels.

Die nachfolgend näher beschriebene Kartenlesevorrichtung ist eine zum gleichzeitigen Kontaktieren mehrerer Karten wie beispielsweise mehrerer Chipkarten, mehrerer SIMs, mehrerer MultiMediaCards oder dergleichen ausgelegte Kartenlesevorrichtung. Sie zeichnet sich dadurch aus, daß sie zum Kontaktieren der zu lesenden Karten mehrere elektrische Verbinder aufweisen kann, wobei diese mehreren elektrischen Verbinder (eine beliebige Anzahl derselben) unter gegenseitiger elektrischer und mechanischer Verbindung übereinander stapelbar sind.

Wenn die Kartenlesevorrichtung eine zur Montage auf einer Leiterplatte ausgelegte Kartenlesevorrichtung ist, was bei der vorliegend betrachteten Kartenlesevorrichtung der Fall ist, so muß von den mehreren elektrischen Verbindern nur einer (vorzugsweise der unterste elektrische Verbinder des Verbinderstapels) auf die Leiterplatte montiert (auf diese aufgelötet) werden.

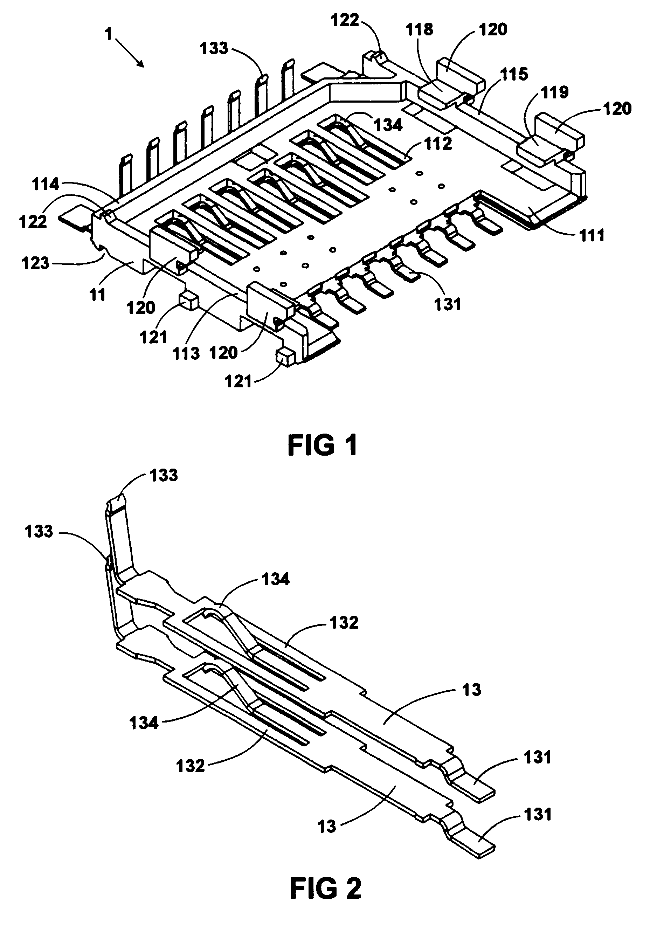

Der Aufbau eines zum Kontaktieren einer Karte ausgelegten elektrischen Verbinders ist in Figur 1 dargestellt.

Der elektrische Verbinder ist mit dem Bezugszeichen 1 bezeichnet und besteht aus einem Isolierkörper 11 und einer Anzahl von Kontaktelementen 13.

Der Isolierkörper 11 ist ein im wesentlichen plattenartiges Element aus elektrisch isolierendem Material. Es handelt sich im betrachteten Beispiel um eine im wesentlichen rechteckförmige Grundplatte 111, die im zentralen Teil Öffnungen 112, und entlang des Randes, genauer gesagt an den gemäß der Darstellung in der Figur 1 linken, hinteren und rechten Rändern erhöhte Randabschnitte 113 (links), 114 (hinten) und 115 (rechts) aufweist.

Von den erhöhten Randabschnitten (im betrachteten Beispiel vom linken Randabschnitt 113 und vom rechten Randabschnitt 115) gehen in wesentlichen parallel über der Grundplatte 111 verlaufende Zungen 116, 117, 118, und 119 ab.

Der Abstand zwischen der Grundplatte 111 und den Zungen 116 bis 119 entspricht etwa der Dicke der durch den elektrischen Verbinder kontaktierbaren Karte.

Die Grundplatte 111, die erhöhten Randabschnitten 113, 114 und 115, und die Zungen 116, 117, 118 und 119 definieren einen zur Aufnahme einer zu kontaktierenden Karte dienenden Kartenaufnahmeabschnitt; eine zu lesende Karte kann von der keinen erhöhten Randabschnitt aufweisenden vorderen Seite des elektrischen Verbinders in den Kartenaufnahmeabschnitt eingeschoben werden. Dabei dienen die erhöhten Randabschnitte 113 und 115 als Seitenführung, und der hintere erhöhte Randabschnitt 114 als Anschlag für die zu kontaktierende Karte.

Durch die Öffnungen 112 können Teile der sonst innerhalb oder unter der Grundplatte 111 verlaufenden Kontaktelemente 13 in den Kartenaufnahmeabschnitt hineinragen und dort in Kontakt mit den Kontaktstellen einer im Kartenaufnahmeabschnitt befindlichen Karte kommen.

Im betrachteten Beispiel weist der elektrische Verbinder sieben Kontaktelemente 13 auf. Es sei jedoch bereits an dieser Stelle darauf hingewiesen, daß auch beliebig viel mehr oder weniger Kontaktelemente pro elektrischem Verbinder vorgesehen sein kann; die Anzahl der Kontaktelemente 13 pro elektrischem Verbinder 1 hängt von der Anzahl der zu kontaktierenden Kontaktstellen der zu lesenden Karte(n) ab.

Der Aufbau der Kontaktelemente 13 ist aus Figur 2 ersichtlich. Die Kontaktelemente sind im betrachteten Beispiel langgestreckte elektrisch leitende Elemente mit einem vorderen Ende 131, einem mittleren Teil 132 und einem im wesentlich senkrecht nach oben gebogenen (abgewinkelten) hinteren Ende 133.

Das vordere Ende 131 des Kontaktelements 13 ist als eine Lötfahne ausgebildet und kann beispielsweise unter Verwendung eines SMT-Lötverfahrens auf die die Kartenlesevorrichtung tragende Leiterplatte montiert werden.

Der mittlere Teil 132 des Kontaktelements 13 enthält eine elastisch bewegbare Kontaktfeder 134; diese Kontaktfeder 134 ist der durch die Öffnung 112 der Grundplatte 111 des Isolierkörpers 11 in den Kartenaufnahmeabschnitt ragende Teil des Kontaktelements 13.

Das hintere Ende 133 des Kontaktelements 13 ist ein sogenannter Buskontakt. Wenn mehrere der elektrischen Verbinder gemäß Figur 1 auf die nachfolgend noch näher beschriebene Art und Weise übereinandergestapelt werden, kommen die hinteren Enden 133 von übereinanderliegenden Kontaktelementen wie in Figur 2 veranschaulicht in Kontakt, wodurch die jeweils übereinander liegenden Kontaktelemente 13 aller elektrischer Verbinder elektrisch miteinander verbunden werden.

Wie bereits angedeutet wurde, sind elektrische Verbinder der in der Figur 1 gezeigten Art unter gegenseitiger elektrischer und mechanischer Verbindung übereinanderstapelbar.

Die elektrische Verbindung von übereinandergestapelten elektrischen Verbindern erfolgt auf die vorstehend bereits beschriebenen Art und Weise, d.h. über die hinteren Enden 133 der Kontaktelemente 13.

Zur mechanischen Verbindung von aufeinandergesetzten elektrischen Verbindern weist der elektrische Verbinder eine Reihe von Verbindungselementen auf. Die besagten Verbindungselemente sind im betrachteten Beispiel an den erhöhten Randabschnitten vorgesehene hakenartige Elemente und mit diesen zusammenwirkende Nocken, sowie Rastnasen und mit diesen zusammenwirkende Rastvertiefungen.

Die hakenartigen Elemente sind in den Figuren mit dem Bezugszeichen 120 bezeichnet. Es handelt sich im betrachteten Beispiel um Winkel, die an der Außenseite (an der vom Kartenaufnahmeabschnitt abgewandten Seite) der erhöhten Randabschnitte 113 und 115 vorgesehen sind, und von denen sich der eine Schenkel nach oben über die erhöhten Randabschnitte 113 und 115 hinaus erstreckt, und von denen sich der daran anschließende andere Schenkel entgegen der Karteneinschubrichtung im wesentlichen parallel zu den erhöhten Randabschnitten 113 und 115 erstreckt.

Die den hakenartigen Elementen 120 zugeordnete Nocken sind in einer der Anzahl von hakenartigen Elementen entsprechenden Anzahl vorgesehen; sie sind mit den Bezugszeichen 121 bezeichnet. Es handelt sich im betrachteten Beispiel um an der Außenseite der erhöhten Randabschnitte 113 und 115 vorgesehene Erhebungen.

Die Rastnasen sind in den Figuren mit dem Bezugszeichen 122 bezeichnet. Es handelt sich im betrachteten Beispiel um an der Oberseite der erhöhten Randabschnitte 113 und 115 vorgesehene Erhebungen.

Die den Rastnasen zugeordneten Rastvertiefungen sind in einer der Anzahl von Rastnasen entsprechenden Anzahl vorgesehen; sie sind mit dem Bezugszeichen 123 bezeichnet. Es handelt sich im betrachteten Beispiel um an der Unterseite der Grundplatte 111 (unterhalb der erhöhten Randabschnitte 113 und 115) vorgesehene Vertiefungen.

Wenn auf einen elektrischen Verbinder nach Art der Figur 1 ein zweiter elektrischer Verbinder dieser Art aufgesetzt werden soll, so wird zunächst der zweite elektrische Verbinder relativ zum ersten elektrischen Verbinder etwas nach vorn versetzt auf diesen aufgesetzt. Dabei kommt der zweite elektrische Verbinder mit seiner Grundplatte 111 auf den erhöhten Randabschnitten 113 und 115 des ersten elektrischen Verbinders zu liegen. Dann wird der zweite elektrische Verbinder relativ zum ersten elektrischen Verbinder nach hinten geschoben. Dabei gelangen die Nocken 121 des zweiten (oberen) elektrischen Verbinders unter die parallel zu den erhöhten Randabschnitten 113, 115 verlaufenden Abschnitte der hakenartigen Elemente 120 des ersten (unteren) elektrischen Verbinders. Bei fortgesetztem Schieben des zweiten elektrischen Verbinders kommt der zweite elektrische Verbinder schließlich genau über dem ersten elektrischen Verbinder (ohne irgendeinen Versatz zu diesem) zu liegen. Dies ist die bestimmungsgemäße Relativlage von erstem und zweitem elektrischen Verbinder. In diesem Zustand verrasten die Rastnasen 122 des ersten (unteren) elektrischen Verbinders und die Rastvertiefungen 123 des zweiten (oberen) elektrischen Verbinders ineinander, und schlagen die Nocken 121 des zweiten (oberen) elektrischen Verbinders an die nach oben verlaufenden Abschnitte der hakenartigen Elemente 120 des ersten (unteren) elektrischen Verbinders an.

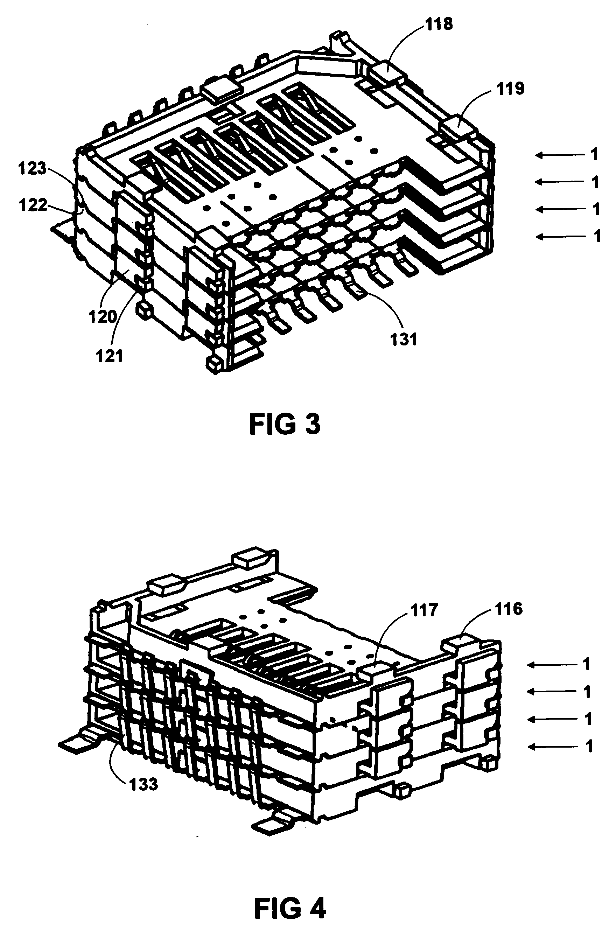

Auf den zweiten elektrischen Verbinder kann auf die selbe Art und Weise ein gleichartiger dritter elektrischer Verbinder, auf den dritten elektrischen Verbinder ein gleichartiger vierter elektrischer Verbinder aufgesetzt werden usw. Im Ergebnis kann man so zu einem Verbinderstapel gelangen wie er in den Figuren 3 und 4 dargestellt ist.

Wie aus den Figuren 3 und 4 ersichtlich ist, sind die aufeinandergesetzten elektrischen Verbinder exakt (ohne gegenseitigen seitlichen Versatz) aufeinandergesetzt. Weil die aufeinandergesetzten elektrischen Verbinder elektrisch miteinander verbunden sind, genügt es, wenn nur einer von diesen elektrisch mit der den Verbinderstapel tragenden Leiterplatte verbunden wird. Dies ist im betrachteten Beispiel der unterste elektrische Verbinder des Verbinderstapels. Dieser wird so auf die Leiterplatte montiert, daß die von diesem zu lesende Karte im bestimmungsgemäß in den elektrischen Verbinder eingesetzten Zustand parallel zu der zur Bestückung vorgesehenen Oberfläche der Leiterplatte angeordnet ist. Dann kann - ohne daß die zur Montage der Kartenlesevorrichtung auf die Leiterplatte notwendige Fläche zunimmt - ein aus beliebig vielen elektrischen Verbindern bestehender Verbinderstapel gebildet werden. Der Verbinderstapel kann durch Hinzufügen oder Entfernen von elektrischen Verbindern jederzeit vergrößert oder verkleinert werden.

Von den elektrischen Verbindern, die nicht mit der Leiterplatte verlötet werden müssen, also von allen elektrischen Verbindern außer dem untersten elektrischen Verbinder des Verbinderstapels, können die zum Anlöten an die Leiterplatte vorgesehenen Teile der Kontaktelemente 13 (die vorderen Enden 131 derselben) weggelassen oder entfernt werden (siehe Figur 3); dann können diese das Einschieben von zu kontaktierenden Karten in die betreffenden elektrischen Verbinder nicht behindern.

Beim obersten elektrischen Verbinder des Verbinderstapels können zumindest Teile der hinteren Enden 133 der Kontaktelemente 13 sowie die hakenartigen Elemente 120 weggelassen oder entfernt werden (siehe Figur 4); dadurch kann die Höhe des Verbinderstapels minimiert werden.

In jeden elektrischen Verbinder kann eine zu lesende Karte eingesetzt werden. Anders ausgedrückt: für jede zu lesende Karte ist ein eigener elektrischer Verbinder vorgesehen. Damit ist die Art der zu lesenden Karten keinen Einschränkungen unterworfen. Insbesondere ist es auch möglich, Karten zu verwenden, deren zu kontaktierende Kontaktstellen als Oberflächenkontakte ausgebildet sind. Ferner können dadurch auch unterschiedlich ausgebildete (beispielsweise unterschiedlich angeordnete und/oder ausgebildete Kontaktstellen aufweisende) Karten kontaktiert werden.

Die beschriebene Kartenlesevorrichtung, insbesondere die elektrischen Verbinder derselben sind mannigfaltig modifizierbar.

So ist es beispielsweise nicht erforderlich, daß pro zu lesender Karte ein eigener elektrischer Verbinder vorgesehen ist. Die einzelnen elektrischen Verbinder können (wie es beispielsweise bei der Kartenlesevorrichtung gemäß der eingangs bereits erwähnten DE 196 53 599 A1 der Fall ist) auch zum gleichzeitigen Kontaktieren von mehr als einer Karte vorgesehen werden.

Ferner kann vorgesehen werden, daß der mit der Leiterplatte zu verlötende elektrische Verbinder an mehr und/oder anders verteilten Stellen als beim vorstehend beschriebenen Ausführungsbeispiel mit der Leiterplatte verlötet wird. Dies läßt sich beispielsweise dadurch bewerkstelligen, daß zusätzlich oder alternativ das hintere Ende 133 der Kontaktelemente 13 mit der Leiterplatte verlötet wird. Hierzu kann das hintere Ende 133 der Kontaktelemente 13 durch einen in Längsrichtung verlaufenden Schnitt oder Schlitz geteilt werden, wobei der eine Teil wie gehabt als Buskontakt ausgebildet und verwendet wird, und wobei der andere Teil als Lötfahne zum Verlöten mit der Leiterplatte ausgebildet und verwendet wird.

Die beschriebene Kartenlesevorrichtung erweist sich unabhängig von den Einzelheiten der praktischen Realisierung derselben in mehrfacher Hinsicht als vorteilhaft. Sie ermöglicht es, bei minimalem Platzbedarf auf der sie tragenden Leiterplatte eine beliebige Anzahl von Karten gleichzeitig zu kontaktieren.

## Patentansprüche

1. Kartenlesevorrichtung mit einem elektrischen Verbinder (1) zum Kontaktieren von Kontaktelementen einer zu lesenden Karte,
**dadurch gekennzeichnet**,
daß der elektrische Verbinder (1) derart ausgebildet ist, daß mehrere elektrische Verbinder dieser Art unter gegenseitiger elektrischer und mechanischer Verbindung übereinander stapelbar sind.

2. Kartenlesevorrichtung nach Anspruch 1,
**dadurch gekennzeichnet**,
daß die elektrische Verbindung und die mechanische Verbindung zwischen übereinander gestapelten elektrischen Verbindern (1) jederzeit herstellbare und lösbare Verbindungen sind.

3. Kartenlesevorrichtung nach Anspruch 1 oder 2,
**dadurch gekennzeichnet**,
daß der elektrische Verbinder (1) einen Isolierkörper (11) und Kontaktelemente (13) umfaßt.

4. Kartenlesevorrichtung nach Anspruch 3,
**dadurch gekennzeichnet**,
daß der Isolierkörper (11) durch eine Grundplatte (111) mit erhöhten Randabschnitten (113, 114, 115) gebildet wird.

5. Kartenlesevorrichtung nach Anspruch 4,
**dadurch gekennzeichnet**,
daß von den erhöhten Randabschnitten (113, 114, 115) im wesentlichen parallel über der Grundplatte (111) verlaufende Zungen (116 bis 119) abgehen.

6. Kartenlesevorrichtung nach Anspruch 5,
**dadurch gekennzeichnet**,
daß die Grundplatte (111), die erhöhten Randabschnitte (113, 114, 115), und die Zungen (116 bis 119) einen Kartenaufnahmeabschnitt bilden, in den von einer keinen erhöhten Randabschnitt aufweisenden Seite der Grundplatte (111) eine zu lesende Karte einschiebbar ist.

7. Kartenlesevorrichtung nach Anspruch 6,
**dadurch gekennzeichnet**,
daß die erhöhten Randabschnitte (113, 114, 115) derart ausgebildet sind, daß sie als seitliche Führung und als Anschlag für die in den Kartenaufnahmeabschnitt einzuführende Karte wirken.

8. Kartenlesevorrichtung nach einem der Ansprüche 4 bis 7,
**dadurch gekennzeichnet**,
daß die erhöhten Randabschnitte (113, 114, 115) Verbindungselemente (120, 121, 122, 123) tragen, mit Hilfe welcher zwei aufeinandergesetzte elektrische Verbinder (1) mechanisch miteinander verbindbar sind.

9. Kartenlesevorrichtung nach Anspruch 8,
**dadurch gekennzeichnet**,
daß die Verbindungselemente (120, 121, 122, 123) hakenartige Elemente (120) und Nocken (121) umfassen, die derart angeordnet und ausgebildet sind, daß bei bestimmungsgemäß aufeinandergesetzten elektrischen Verbindern die Nocken (121) des einen elektrischen Verbinders (1) mit den hakenartigen Elementen (120) des anderen elektrischen Verbinders (1) in Eingriff kommen.

10. Kartenlesevorrichtung nach Anspruch 9,
**dadurch gekennzeichnet**,
daß die hakenartigen Elemente (120) und die Nocken (121) bei bestimmungsgemäß aufeinandergesetzten elektrischen Verbindern (1) derart in Eingriff stehen, daß kein Abziehen des oberen elektrischen Verbinders (1) nach oben möglich ist.

11. Kartenlesevorrichtung nach einem der Ansprüche 8 bis 10,
**dadurch gekennzeichnet**,
daß die Verbindungselemente (120, 121, 122, 123) Rastnasen (122) und Rastvertiefungen (123) umfassen, die derart angeordnet und ausgebildet sind, daß bei bestimmungsgemäß aufeinandergesetzten elektrischen Verbindern die Rastnasen (122) des einen elektrischen Verbinders (1) mit den Rastvertiefungen (123) des anderen elektrischen Verbinders (1) in Eingriff kommen.

12. Kartenlesevorrichtung nach Anspruch 11,
**dadurch gekennzeichnet**,
daß die Rastnasen (122) und die Rastvertiefungen (123) bei bestimmungsgemäß aufeinandergesetzten elektrischen Verbindern (1) derart in Eingriff stehen, daß kein relativ zueinander erfolgendes Verschieben der elektrischen Verbinder möglich ist.

13. Kartenlesevorrichtung nach einem der Ansprüche 8 bis 12,
**dadurch gekennzeichnet**,
daß die elektrischen Verbinder (1) im bestimmungsgemäß aufeinandergesetzten Zustand ohne gegenseitigen seitlichen Versatz übereinander gestapelt sind.

14. Kartenlesevorrichtung nach einem der Ansprüche 3 bis 13,
**dadurch gekennzeichnet**,
daß die Kontaktelemente (13) langgestreckte Elemente sind, die an ihrem vorderen Ende (131) als Lötfahne, in ihrem mittleren Teil (132) als Kontaktfeder zur Kontaktierung einer zu lesenden Karte, und an ihrem hinteren Ende (133) als Kontakt zur Kontaktierung eines Kontaktelements eines auf den betreffenden elektrischen Verbinder aufgesetzten elektrischen Verbinders ausgebildet sind.

15. Kartenlesevorrichtung nach einem der vorhergehenden Ansprüche,
**dadurch gekennzeichnet**,
daß der elektrische Verbinder (1) dazu ausgelegt ist, auf eine Leiterplatte aufgelötet zu werden.

16. Kartenlesevorrichtung nach Anspruch 15,
**dadurch gekennzeichnet**,
daß nur einer der elektrischen Verbinder (1) eines Verbinderstapels auf die Leiterplatte aufgelötet wird.
